# EUROPÄISCHE PATENTSCHRIFT

(11) **EP 2 731 239 B1**
(45) Veröffentlichungstag und Bekanntmachung des Hinweises auf die Patenterteilung: **05.12.2018**
(21) Anmeldenummer: 13190629.9
(22) Anmeldetag: 29.10.2013
(51) Int. Cl.: H02K 11/00

(54) **Schaltkappe mit integriertem temperaturabhängigen Schalter**
Switching cap with integrated thermally actuated switch
Capuchon de commutation avec interrupteur à commande thermique intégré

(30) Priorität: 08.11.2012 DE 102012110708
(43) Veröffentlichungstag der Anmeldung: 14.05.2014
(73) Patentinhaber: Thermik Gerätebau GmbH, 99706 Sondershausen (DE)
(72) Erfinder: Klaschewski, Elfriede, 99631 Günstedt (DE); Liehr, Hans-Christian, 06526 Sangerhausen (DE); Neumann, René, 99706 Badra (DE)
(74) Vertreter: Witte, Weller & Partner Patentanwälte mbB

(56) Entgegenhaltungen:
- EP-A1- 1 727 261
- EP-A1- 2 306 622
- DE-U1- 20 021 985
- DE-U1-202007 007 391

## Beschreibung

Die vorliegende Erfindung betrifft eine Schaltkappe für einen Elektromotor mit zumindest einer Motorwicklung und zumindest zwei Anschlussleitungen, wobei die Schaltkappe ein zylindrisches Unterteil, das mit einer Einstecköffnung zur Aufnahme eines stirnseitigen Abschnitts der Motorwicklung versehen ist, einen integrierten temperaturabhängigen Schalter, der derart angeordnet ist, dass er in Anlage mit einer in dem Unterteil aufgenommenen Motorwicklung gelangt, und eine das Unterteil abschließende Schaltscheibe aufweist, die auf ihrer von dem Unterteil abgewandten Oberseite zum elektrischen Verschalten der Anschlussleitungen mit dem temperaturabhängigen Schalter und mit Wicklungsdrähten der Motorwicklung ausgebildet ist.

Eine derartige Schaltkappe ist aus dem DE 20 2007 007 391 U1 bekannt.

Elektromotoren der hier in Rede stehenden Art weisen einen Stator sowie einen Rotor auf, wobei sie als Gleichstrommotor, Universalmotor, Asynchronmotor, Wechselstrommotor oder beispielsweise auch als Drehstrommotor ausgebildet sein können. Der Elektromotor kann dabei sowohl als Außenläufermotor als auch als Innenläufermotor ausgebildet sein.

Derartige Elektromotoren werden beispielsweise als Pumpen in Waschmaschinen oder auch zur Rollladensteuerung verwendet, wo sie dann in die Antriebswelle eingesetzt sind.

Aus Sicherheitsgründen werden derartige Elektromotoren bezüglich ihrer Temperaturentwicklung überwacht, um ein Überhitzen des Elektromotors und damit verbundene Brandrisiken zu verhindern.

Dazu wird in den Elektromotor ein temperaturabhängiger Schalter eingebaut, der in thermisch engem Kontakt mit der Motorwicklung des Elektromotors steht und elektrisch in Reihe zu den Wicklungsdrähten des Elektromotors geschaltet ist. Auf diese Weise fließt der den Elektromotor treibende Strom durch den temperaturabhängigen Schalter.

Derartige temperaturabhängige Schalter können beliebiger Bauart sein, Beispiele für am Markt eingeführte Schalter finden sich in der DE 21 21 802 A1 sowie der DE 196 09 310 A1.

Derartige temperaturabhängige Schalter weisen ein Bimetallteil auf, das bei Überschreiten ihrer Ansprechtemperatur seine Konformation ändert und dadurch den Schalter öffnet. Wenn sich die Temperatur des überwachten Elektromotors über die durch die Konstruktion des temperaturabhängigen Schalters vorgegebene Ansprechtemperatur hinaus erhöht, öffnet der temperaturabhängige Schalter und der Elektromotor wird stromlos geschaltet.

Es sind temperaturabhängige Schalter bekannt, die sich nach dem Abkühlen des überwachten Gerätes unter die Ansprechtemperatur automatisch wieder einschalten. Andere temperaturabhängige Schalter weisen einen Parallelwiderstand auf, der den temperaturabhängigen Schalter solange auf einer Temperatur oberhalb der Ansprechtemperatur hält, bis der Stromkreis abgeschaltet wurde. Ferner sind noch temperaturabhängige Schalter bekannt, die den Stromkreis auch öffnen, wenn der durch sie hindurchfließende Strom einen bestimmten Wert überschreitet. Zu diesem Zweck sind sie mit einem Serienwiderstand versehen, der entsprechende Ohmsche Wärme erzeugt.

Zum Schutz von Elektromotoren können derartige temperaturabhängige Schalter in verschiedener Ausgestaltung und Bauart verwendet werden. Dabei ist es erforderlich, die temperaturabhängigen Schalter in Serie zu den Wicklungsdrähten der Motorwicklung zu schalten und gleichzeitig dafür zu sorgen, dass der temperaturabhängige Schalter sich in engem thermischem Kontakt zu der Motorwicklung des überwachten Elektromotors befindet.

Im einfachsten Fall werden dazu mit Anschlussleitungen versehene temperaturabhängige Schalter beim Wickeln der Motorwicklungen in diese eingelegt, so dass nach der Fertigstellung der Motorwicklung nur noch die Anschlussleitungen des temperaturabhängigen Schalters sowie die Wicklungsdrähte der Motorwicklung aus dem Wicklungskopf hervorragen. Dort werden diese Drähte dann miteinander verschaltet, so dass die gewünschte elektrische Serienschaltung entsteht. Danach werden die Anschlussleitungen für die elektrische Versorgung angeschlossen.

Die bekannten Elektromotoren sind an ihren Stirnseiten mit Flanschen und/oder Abschlusskappen versehen, durch die die Anschlussleitungen nach außen geführt werden. Es ist auch bekannt, diese Abschlusskappen mit einem Aufnahmeraum zur Verdrahtung der Anschlüsse des Elektromotors mit Anschlussleitungen vorzusehen.

Der mit der Montage und Verschaltung derartiger Elektromotoren verbundene Fertigungsprozess ist jedoch nicht hinreichend automatisierbar, so dass Bedarf an verbesserten Konstruktionen besteht.

Aus der eingangs erwähnten DE 20 2007 007 391 U1 ist ein Stator für einen Elektromotor bekannt, bei dem eine Schaltkappe vorgesehen ist, die stirnseitig auf die Statorwicklung aufgeschoben wird.

Der Schaltkappe ist ferner eine Schaltscheibe zugeordnet, in die ein temperaturabhängiger Schalter derart integriert ist, dass er in einem quer zur Oberseite der Schaltscheibe verschiebbaren Gehäuse sitzt, das mit einer Feder beaufschlagt ist, die den temperaturabhängigen Schalter stirnseitig auf den Wicklungskopf des Elektromotors aufdrückt.

Zur Verschaltung der Wicklungsdrähte des Stators mit den Anschlussleitungen sind Schneidklemmen vorgesehen. Die Anschlussleitungen des temperaturabhängigen Schalters sind auf der Oberseite der Schaltscheibe ebenfalls zu Schneidklemmen geführt. Darüber hinaus sind Brücken auf der Oberseite der Schaltscheibe vorgesehen, um die einzelnen Schneidklemmen miteinander zu verbinden.

Bei der bekannten Schaltkappe ist insbesondere von Nachteil, dass sie einen sehr komplizierten Aufbau aufweist, der eine aufwendige Anschlusstechnik erfordert.

Konstruktiv ist weiter von Nachteil, dass der temperaturabhängige Schalter unter Zwischenlage eines beweglichen Gehäuses auf der Stirnseite des Wicklungskopfes aufliegt und über eine Feder in Anlage mit dem Wicklungskopf gehalten werden muss.

All dies führt dazu, dass die bekannte Schaltkappe relativ voluminös aufgebaut ist und ferner sowohl in der Herstellung als auch in der Montage aufwändig und kostenintensiv ist.

Darüber hinaus ist die bekannte Schaltscheibe für Elektromotoren mit kleinem Durchmesser nicht geeignet.

Das DE 200 21 985 U1 beschreibt ebenfalls eine Schaltscheibe für Elektromotoren, auf der ein temperaturabhängiger Schalter angeordnet ist, dessen Anschlussleitungen zu Mehrkontakt-Schneidklemmen geführt sind, die der Verbindung des temperaturabhängigen Schalters mit weiteren Leitungen dienen.

Die EP 1 727 261 A1 offenbart eine Schaltscheibe für Elektromotoren, an der ein temperaturabhängiger Schalter angeordnet ist, der über seine zu Schneidklemmen geführten Anschlussleitungen mechanisch gehalten wird. Der temperaturabhängige Schalter wird dabei durch einen Federarm gegen die Statorwicklungen des Elektromotors gedrückt.

Die EP 2 306 622 A1 beschreibt ebenfalls eine Schaltscheibe für Elektromotoren, an der Taschen vorgesehen sind, in denen jeweils ein temperaturabhängiger Schalter spielfrei und kraftschlüssig gehalten ist. Die Taschen liegen federelastisch an der jeweiligen Statorwicklung an. Die Anschlussdrähte der temperaturabhängigen Schalter sind mit Anschlussteckern verbunden.

Vor diesem Hintergrund liegt der vorliegenden Erfindung die Aufgabe zugrunde, eine Schaltkappe der eingangs genannten Art derart weiterzubilden, dass sie einfach und preiswert herzustellen und einfach zu montieren ist.

Diese Aufgabe wird erfindungsgemäß durch die Merkmale von Anspruch 1 gelöst.

Die der Erfindung zugrundeliegende Aufgabe wird auf diese Weise vollkommen gelöst.

Die Erfinder der vorliegenden Anmeldung haben nämlich erkannt, dass es nicht erforderlich ist, die temperaturabhängigen Schalter mit eigenen Anschlussdrähten oder Anschlusslitzen zu versehen, die auf der Oberseite der Schaltscheibe verlegt und kontaktiert werden, sondern dass die temperaturabhängigen Schalter auch selbst mit Anschlusskontakten zur mechanischen Verbindung mit elektrischen Drähten und Leitungen versehen werden können.

Wenn ein derartiger temperaturabhängiger Schalter in der Schaltkappe verbaut, also in ihre Schaltscheibe integriert wird, ist erfindungsgemäß die Anordnung so getroffen, dass die Anschlusskontakte von der Oberseite der Schaltscheibe her zugänglich sind. Bei dem Aufsetzen der Schaltkappe auf die Motorwicklung muss dann lediglich dafür gesorgt werden, dass die Wicklungsenden der Wicklungsdrähte der Motorwicklung durch eine in der Schaltscheibe vorgesehene Öffnung oder von der Seite her auf die Oberseite der Schaltscheibe gelangen, wo sie dann entsprechend mit den Anschlussleitungen und den Anschlusskontakten des temperaturabhängigen Schalters verschaltet werden.

An einen der beiden Anschlusskontakte des temperaturabhängigen Schalters wird dabei ein Wicklungsdraht der Motorwicklung angeschlossen, während an den anderen Anschlusskontakt unmittelbar eine äußere Anschlussleitung angeschlossen wird, so dass ohne zusätzliche Stützelemente oder Kontaktelemente der temperaturabhängige Schalter in Reihe zwischen die Anschlussleitung und die Motorwicklung geschaltet ist.

Dabei ist es dann bevorzugt, wenn die Schaltscheibe auf ihrer Oberseite weitere Anschlusskontakte aufweist.

Einer dieser Anschlusskontakte dient zur Verbindung mit dem zweiten Wicklungsdraht der Motorwicklung, ein weiterer Anschlusskontakt zur Verbindung mit einer weiteren äußeren Anschlussleitung. Diese beiden Anschlusskontakte müssen dann noch durch eine Brücke miteinander verbunden werden, so dass zwischen den beiden so angeschlossenen äußeren Anschlussleitungen nunmehr die Motorwicklung über ihre beiden Wicklungsdrahtenden in Reihe mit dem temperaturabhängigen Schalter angeordnet ist.

Ein dritter Anschlusskontakt dient zur Aufnahme eines Schutzleiters. In bestimmten Anwendungsfällen kann ein vierter Anschlusskontakt auf der Oberseite der Schaltscheibe vorgesehen sein, der mit dem dritten Anschlusskontakt über eine weitere Brücke verbunden ist und beispielsweise mit einem Schutzgehäuse des Elektromotors verbunden ist.

Die eine oder höchstens zwei Brücken, die bei dieser Ausgestaltung der neuen Schaltkappe erforderlich sind, können auf beliebige Art und Weise bereitgestellt werden.

Die neue Schaltkappe, in der jetzt keine Anschlussleitungen des temperaturabhängigen Schalters mehr verlegt werden müssen, und auf deren Oberseite nur wenige Anschlusskontakte vorgesehen sind, lässt sich mit einem sehr geringen Durchmesser fertigen, wobei dennoch eine vollständig automatische Montage der Motorwicklung und der Anschlussleitungen möglich ist, weil sämtliche Anschlusskontakte von der Oberseite der Schaltscheibe her zugänglich sind.

Dabei ist es bevorzugt, wenn zumindest ein Anschlusskontakt als Doppelkontakt ausgebildet ist.

Unter einem Doppelkontakt wird im Rahmen der vorliegenden Erfindung ein Kontaktstück verstanden, das beispielsweise zwei nebeneinanderliegende Anschlussmöglichkeiten für Drähte und Leitungen aufweist. Wenn somit beispielsweise ein Wicklungsdraht der Motorwicklung und eine Anschlussleitung der Außenanschlüsse in den Doppelkontakt eingelegt sind, sind Wicklungsdraht und Anschlussleitung elektrisch miteinander verbunden, weil der Doppelkontakt beispielsweise einstückig aus elektrisch leitendem Material gefertigt ist.

Auf diese Weise können die zuvor erwähnten Brücken vermieden werden, denn je zwei miteinander zu verbindende Einfachkontakte werden erfindungsgemäß zu einem Doppelkontakt zusammengeführt.

Auch die Fertigung der Schaltkappe selbst gestaltet sich wegen der erfindungsgemäßen Ausgestaltung extrem einfach. Nachdem die Schaltkappe selbst gefertigt wurde, beispielsweise durch Spritzgießen eines entsprechenden Kunststoffes, müssen lediglich der temperaturabhängige Schalter und die entsprechenden Anschlusskontakte montiert werden, was ebenfalls von der Oberseite der Schaltscheibe her möglich ist. Auch die Bestückung und sozusagen Vormontage der Schaltkappe lässt sich somit vollautomatisch bewerkstelligen.

Dabei ist es bevorzugt, wenn der temperaturabhängige Schalter mit zwei Einfachkontakten ausgestattet ist und auf der Oberseite der Schaltscheibe ein Doppelkontakt angeordnet ist.

Unter einem Einfachkontakt wird hiermit die Möglichkeit verstanden, einen Wicklungsdraht oder eine Anschlussleitung mit dem Kontakt auf lötfreie Weise elektrisch zu verbinden.

Über die beiden Einfachkontakte des temperaturabhängigen Schalters werden somit ein Wicklungsdraht und eine Anschlussleitung miteinander verbunden. Über den Doppelkontakt können dann der andere Wicklungsdraht sowie die andere Anschlussleitung miteinander verbunden werden. Diese Ausgestaltung ist also für Motoren vorgesehen, die lediglich zwei Anschlussleitungen benötigen, beispielsweise für Gleichstrommotoren.

Der temperaurabhängige Schalter kann auch mit einem Einfachkontakt und einem Doppelkontakt versehen sein, wenn die Schaltkappe beispielsweise an einem Asynchron-Wechselstrommotor mit Kurzschlussläufer montiert werden soll, bei dem zwei der Wicklungsdrähte an dem temperaturabhängigen Schalter miteinander verbunden werden sollen.

In einer Weiterbildung ist auf der Oberseite ein zweiter Doppelkontakt vorgesehen, über den beispielsweise der Schutzleiter mit dem Elektromotor verbunden werden kann.

Die Anschlusskontakte sind dabei vorzugsweise als Schneidklemmkontakte ausgebildet.

Schneidklemmkontakte sind an sich bekannt, sie sind flache Blech- oder Metallstreifen, die einen Längsschlitz aufweisen, der in einem Durchgangsloch mündet. In diese Längsschlitze werden die isolierten Enden von Wicklungsdrähten oder Anschlussleitungen hineingeschoben, wobei die Isolation beim Herunterschieben der Wicklungsdrähte oder Anschlussleitungen zu dem Durchgangsloch durchgeschnitten wird, so dass ein dauerhafter elektrischer Kontakt entsteht.

Schneidklemmkontakte werden beispielsweise in Kunststofftaschen eingelegt, wobei sie über geeignete Brücken miteinander verbunden werden können.

Bei dem erfindungsgemäß verwendeten temperaturabhängigen Schalter sind die Schneidklemmkontakte unmittelbar an die Außenanschlüsse des Schaltergehäuses angelötet oder angeschweißt.

Schneidklemmkontakte können auch als Doppelkontakte ausgelegt werden, sie weisen dann in einem breiteren Blech zwei oder mehr Längsschlitze und parallel zueinander liegende Durchgangslöcher auf, so dass zwei Drähte oder Leitungen kontaktiert werden können, die wegen des einstückig ausgebildeten Doppelkontaktes dann elektrisch leitend miteinander verbunden sind.

In einem anderen Ausführungsbeispiel sind die Anschlusskontakte als Aufsteckkontakte für Stecker oder Kabelschuhe ausgebildet.

Derartige Aufsteckkontakte sind Stifte oder Flachkontakte bzw. sogenannte Kontaktmesser, auf die entsprechende Stecker oder Kabelschuhe aufgesteckt werden, die durch Crimpen oder Verpressen mit den Wicklungsdrähten oder Anschlussleitungen verbunden werden.

Die Anschlusskontakte, die als Schneidklemmkontakte oder als Aufsteckkontakte ausgebildet sind, ermöglichen eine schnelle und einfache elektrische und mechanische Verbindung der Wicklungsdrähte und Anschlussleitungen, wobei auch der entsprechende Platzbedarf auf der Schaltscheibe gering ist.

All dies führt dazu, dass die Schaltscheibe einen geringen Durchmesser und eine geringe Bauhöhe aufweist, wobei sowohl die Fertigung der Schaltscheibe selbst als auch die Montage der Schaltscheibe an der Motorwicklung einfach und kostengünstig erfolgt, insbesondere automatisierbar ist.

Allgemein ist es vorgesehen, da der temperaturabhängige Schalter durch eine Durchgangsöffnung in der Schaltscheibe derart in das Unterteil hineinragt, dass sich sein Boden quer zu der Schaltscheibe erstreckt.

Bei dieser Maßnahme ist von Vorteil, dass der temperaturabhängige Schalter beim Aufstecken der Schaltkappe auf die Motorwicklung in den Wicklungskopf eindringt oder sich seitlich an den Wicklungskopf anlegt, so dass für einen guten thermischen Kontakt zwischen der Motorwicklung und dem temperaturabhängigen Schalter gesorgt wird.

Bei dieser Konstruktion ist die aus dem Stand der Technik bekannte Andruckfeder nicht erforderlich, auch das verschiebbare Gehäuseteil wird nicht benötigt.

Selbstverständlich muss der temperaturabhängige Schalter elektrisch gegenüber dem Wicklungskopf isoliert werden, wozu er im einfachsten Fall mit einer Schutzkappe überzogen wird, wie sie aus der DE 197 05 153 A1 bekannt ist.

Alternativ ist es auch möglich, in dem Unterteil eine nach oben und unten offene Tasche vorzusehen, in die der temperaturabhängige Schalter durch die Schaltscheibe hindurch von oben eingesetzt wird. Diese Tasche schützt den temperaturabhängigen Schalter dann seitlich sowohl vor elektrischem Kontakt als auch vor mechanischer Belastung beim Einschieben der Motorwicklung in das zylinderförmige Unterteil.

Dabei ist es bevorzugt, wenn der temperaturabhängige Schalter mit seinen Anschlusskontakten an der Schaltscheibe gehalten ist, und/oder an einer Innenfläche einer Umfangswand des Unterteils gehalten ist.

Weil der temperaturabhängige Schalter erfindungsgemäß nicht mit Anschlusslitzen sondern mit mechanischen Anschlusskontakten versehen ist, kann er über diese Anschlusskontakte mechanisch in oder an der Schaltscheibe gehalten werden, so dass zusätzliche Maßnahmen, wie sie im Stand der Technik zur Positionierung des temperaturabhängigen Schalters vorgesehen sind, nicht mehr benötigt werden. Auch dies führt zu einem kostengünstigen Aufbau und einer einfachen Fertigung der neuen Schaltkappe.

Weiter ist es bevorzugt, wenn auf der Oberseite der Schaltscheibe eine Aufnahme angeordnet ist, in der die Anschlusskontakte des temperaturabhängigen Schalters so gehalten sind, dass durch Querschlitze in einer Oberseite der Aufnahme Wicklungsdrähte und Anschlussleitungen in Eingriff mit den Anschlusskontakten bringbar sind, wobei vorzugsweise auf der Oberseite der Schaltscheibe eine Aufnahme angeordnet ist, in der die weiteren Anschlusskontakte so gehalten sind, dass durch Querschlitze in einer Oberseite der Aufnahme Wicklungsdrähte und Anschlussleitungen in Eingriff mit den weiteren Anschlusskontakten bringbar sind.

Hier ist von Vorteil, dass die Anschlusskontakte in der Aufnahme vormontiert werden können, so dass der temperaturabhängige Schalter und die weiteren Anschlusskontakte an der Oberseite der Schaltscheibe dadurch montiert werden können, dass die Aufnahme dort angeordnet und befestigt wird, beispielsweise durch Rastverbindungen. Die Querschlitze erleichtern bei der späteren Montage an einer Motorwicklung dann das Einlegen und Eindrücken der Wicklungsdrähte und Anschlussleitungen.

Allgemein ist noch bevorzugt, wenn die Schaltscheibe auf ihrer Oberseite mit einem Verdrahtungsraum versehen ist, wobei vorzugsweise Unterteil, Schaltscheibe und Verdrahtungsraum einstückig ausgebildet sind.

Die konstruktiven Anforderungen an Unterteil, Schaltscheibe und Aufnahmeraum sind wegen der Verwendung eines temperaturabhängigen Schalters mit mechanischen Anschlusskontakten sowie der Anordnung von weiteren Anschlusskontakten an der Oberseite der Schaltscheibe extrem gering, so dass die Schaltkappe mit ihren drei konstruktiven Baugruppen einstückig gefertigt werden kann.

Alternativ ist es auch möglich, jede Baugruppe getrennt zu fertigen, also ein zylinderförmiges Unterteil zum Aufstecken auf die Motorwicklung vorzusehen, auf das dann die Schaltscheibe aufgerastet wird. Nach dem Aufrasten der Schaltscheibe wird dann die Verschaltung vorgenommen, bevor dann als Abschluss der Verdrahtungsraum aufgesteckt wird, durch den die Oberseite der Schaltscheibe gegenüber äußeren Einflüssen geschützt ist.

Weitere Vorteile ergeben sich aus der Beschreibung und der beigefügten Zeichnung.

Ausführungsbeispiele der Erfindung sind in der beigefügten Zeichnung dargestellt und werden in der nachfolgenden Beschreibung näher erläutert. Es zeigen:
- Fig. 1: eine schematische Draufsicht auf einen Elektromotor, an dem die neue Schaltkappe montiert ist;
- Fig. 2: die Vorderansicht eines temperaturabhängigen Schalters, der mit Schneidklemmkontakten ausgerüstet ist;
- Fig.3: die Rückseite eines temperaturabhängigen Schalters, der mit Aufsteckkontakten ausgerüstet ist;
- Fig. 4: eine Schnittdarstellung durch die Schaltkappe aus Fig. 1 längs der Linie IV-IV in Fig. 1;
- Fig. 5: ein Schaltbild für die Anordnung der Anschlusskontakte auf der Schaltscheibe aus Fig. 4; und
- Fig. 6: ein perspektivische Darstellung einer Aufnahme für Anschlusskontakte, die auf der Schaltscheibe aus Fig. 4 montiert wird.

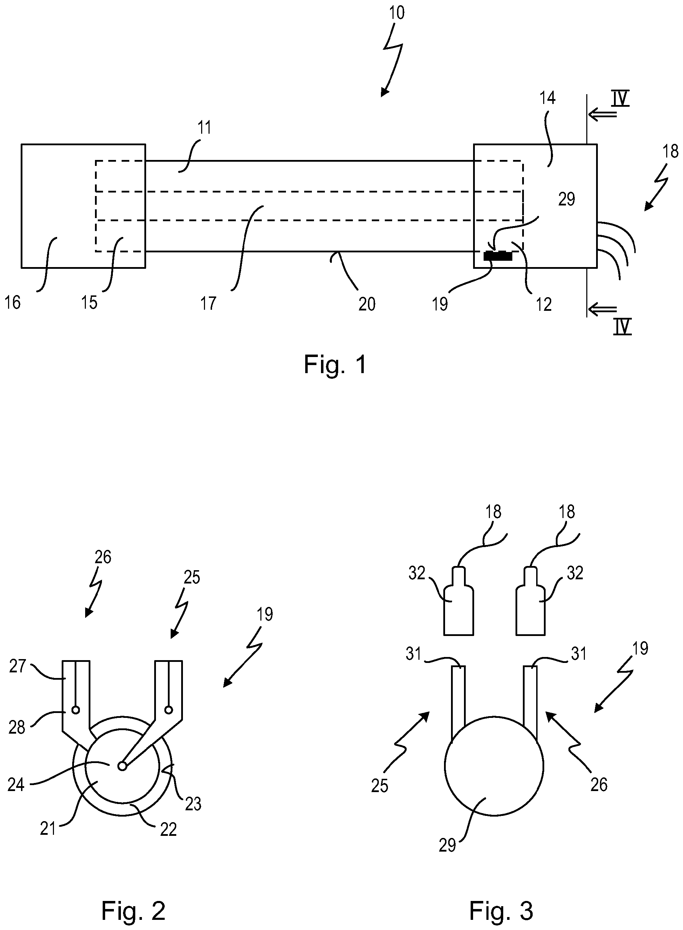

In Fig. 1 ist mit 10 ein schematisch du nicht maßstabsgetreu dargestellter Elektromotor bezeichnet, der eine bei 11 schematisch angedeutete Motorwicklung umfasst. Das Statorblechpaket ist in der Fig. 1 nicht gesondert gezeigt.

Die Motorwicklung 11 ist mit ihrem stirnseitigen Ende 12 in einer Schaltkappe 14 aufgenommen, während sie mit ihrem gegenüberliegenden stirnseitigen Ende 15 in einer Abschlusskappe 16 sitzt.

In der Motorwicklung 11 ist schematisch eine Durchgangsöffnung 17 gezeigt, die in dem in Fig. 1 ebenfalls nicht gezeigten Rotor sitzt und zur Verbindung mit einer anzutreibenden Welle dient.

In Fig. 1 ist noch zu erkennen, dass rechts aus der Schaltkappe 14 drei Anschlussleitungen 18 für den Anschluss des Elektromotors 10 an eine Versorgungsspannung herausführen.

Bei 19 ist in Fig. 1 ein in die Schaltkappe 14 integrierter temperaturabhängiger Schalter gezeigt, der an einer Außenseite 20 der Motorwicklung 11 anliegt, so dass er sich in gutem thermischen Kontakt mit der Motorwicklung 11 befindet.

Der temperaturabhängige Schalter ist in Fig. 2 in einer Draufsicht auf seine Vorderseite gezeigt.

Der temperaturabhängige Schalter 19 weist einen Deckel 21 auf, der von einem umlaufenden, umgebogenen Rand 22 eines Unterteiles 23 gehalten ist.

Mittig auf dem Deckel 21 ist ein erster Außenanschluss 24 vorgesehen, der umlaufende Rand 22 dient als zweiter Außenanschluss. Ein derartiger Schalter ist beispielsweise in der eingangs erwähnten De 21 21 802 A1 beschrieben, so dass wegen weiterer Details auf diese Druckschrift verwiesen wird.

An beide Außenanschlüsse 22, 24 sind Anschlusskontakte 25, 26 angelötet, die in dem Ausführungsbeispiel der Fig. 2 als Schneidklemmen ausgebildet sind, die jeweils einen mittig verlaufenden Schlitz 27 sowie eine Durchgangsöffnung 28 aufweisen.

In noch zu beschreibender Weise können mit den Anschlusskontakten 25, 26 Wicklungsdrähte der Motorwicklung 11 sowie die Anschlussleitungen 18 verbunden werden.

In Fig. 3 ist ein weiteres Ausführungsbeispiel eines temperaturabhängigen Schalters gezeigt, wobei hier der Schalter in einer Draufsicht auf seinen Boden 29 zu erkennen ist. Der Boden 29 ist auch in Fig. 1 angedeutet, er weist dort seitlich auf die Außenseite 20 der Motorwicklung 11 zu.

In Fig. 3 ist der temperaturabhängige Schalter 29 ebenfalls mit Anschlusskontakten 25 und 26 ausgestattet, wobei im vorliegenden Fall die Anschlusskontakte 25 und 26 jeweils als Stifte 31 ausgebildet sind, auf die Kabelschuhe oder Flachstecker aufgeschoben werden können, die auf Wicklungsdrähte oder Anschlussleitungen 18 aufgecrimpt oder aufgepresst sind.

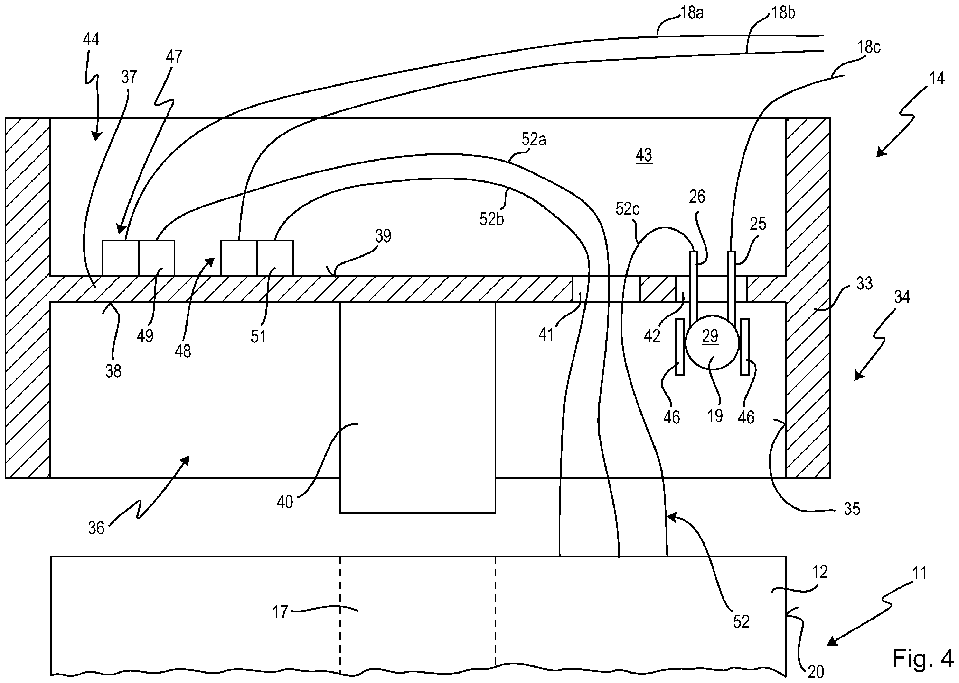

In Fig. 4 ist die Schaltkappe 14 aus Fig. 1 geschnitten längs der Linie IV-IV aus Fig. 1 dargestellt.

Die Schaltkappe 14 umfasst eine umlaufende Wand 33, die ein zylindrisches Unterteil 34 mit einer Innenwand 35 bildet, die eine Einstecköffnung 36 begrenzt.

In die Einstecköffnung 36 wird das stirnseitige erste Ende 12 der Motorwicklung 11 eingesteckt.

Von der Einstecköffnung 36 abgelegen wird das zylindrische Unterteil 34 von einer Schaltscheibe 37 begrenzt, die eine auf die Einstecköffnung 36 zu weisende Unterseite 38 sowie eine davon abgelegene Oberseite 39 aufweist.

Zentrisch an der Unterseite 38 ist ein Zapfen 40 befestigt, der beim Einstecken der Motorwicklung 11 in das Unterteil 34 in der Durchgangsbohrung 17 zu liegen kommt.

In der Schaltscheibe 37 ist eine erste Durchgangsöffnung 41 sowie eine zweite Durchgangsöffnung 42 vorgesehen, die das zylindrische Unterteil 34 mit einem oberhalb der Schaltscheibe 37 vorgesehenen Verdrahtungsraum 43 verbindet, der ebenfalls von der Umfangswand 33 umgeben ist. An ihrem oberen Ende bildet die Umfangswand 33 eine obere Öffnung 44, durch die die Anschlussleitungen 18 in das Innere gelangen.

Unterteil 34, Schaltscheibe 37 und Aufnahmeraum 43 sind in dem Ausführungsbeispiel der Fig. 4 einstückig aus Kunststoff gefertigt, es ist jedoch auch möglich, sie als drei einzelne Kunststoffteile zu fertigen, die während der Montage des Elektromotors nacheinander aufgesteckt werden.

In Fig. 4 ist ferner zu erkennen, dass der temperaturabhängige Schalter 19 an der Innenfläche 35 durch dort vorgesehene Stege 46 gehalten ist.

Der in der Zeichnungsebene der Fig. 4 auf den Benutzer zu weisende Boden 29 des temperaturabhängigen Schalters 16 erstreckt auf diese Weise quer zu der Schaltscheibe 37, so dass er nach dem Einstecken der Motorwicklung 11 in das zylindrische Unterteil 34 mit der Außenseite 20 der Motorwicklung 12 in Anlage gelangt.

In an sich bekannter Weise kann der temperaturabhängige Schalter 19 noch mit einer Schutzkappe umgeben werden, wie sie beispielsweise aus der DE 197 05 153 A1 bekannt ist.

In der in Fig. 4 gezeigten Ausgestaltung erstrecken sich die Anschlusskontakte 25 und 26, die an den temperaturabhängigen Schalter 19 angelötet sind, durch die Durchgangsöffnung 42 hindurch aus dem Unterteil 34 in den Verdrahtungsraum 43, also auf die Oberseite 39 der Schaltscheibe 37.

Auf der Oberseite 39 sind zwei weitere Anschlusskontakte 47 und 48 vorgesehen, die im vorliegenden Fall als Doppelkontakte 49 und 51 ausgebildet sind.

Durch die Durchgangsöffnung 41 erstecken sich Wicklungsdrähte 52, die mit Hilfe der Anschlusskontakte 25, 26, 47, 48 mit den Anschlussleitungen 18 sowie dem Temperaturwächter 19 verbunden sind.

Die Anschlussleitung 18c ist mit dem Anschlusskontakt 25 verbunden, während der andere Anschlusskontakt 26 des temperaturabhängigen Schalters 19 mit dem Wicklungsdraht 52c verbunden ist. Der Wicklungsdraht 52a ist mit dem Doppelkontakt 49 verbunden, der auch mit der Anschlussleitung 18a verbunden ist.

Auf diese Weise ist zwischen die Anschlussdrähte 18a und 18b in Reihe der temperaturabhängige Schalter 19 sowie beispielsweise eine Statorwicklung des Elektromotors geschaltet. In vielen Fällen reicht es auch, den temperaturabhängigen Schalter 19 mit zwei Einfachkontakten 25, 26 und einen weiteren Doppelkontakt 49 vorzusehen.

Der zweite Doppelkontakt 51 ist jedoch in bestimmten Anwendungsfällen ebenfalls erforderlich, er dient dann dazu, eine Anschlussleitung 18b, die beispielsweise der Schutzleiter ist, mit einem Wicklungsdraht 52b zu verbinden, der beispielsweise zu einem in den Figuren nicht gezeigten metallischen Abschirmgehäuse des Elektromotors führt.

Bei der Montage der Schaltkappe 14 an der Motorwicklung 11 sind also lediglich die Wicklungsdrähte 52 durch die Durchgangsöffnung 41 hindurchzufädeln, woraufhin dann das zylindrische Unterteil 34 auf das stirnseitige Ende 12 der Motorwicklung 11 aufgeschoben wird. Dabei gelangt der temperaturabhängige Schalter 19 mit seinem Boden 29 in Anlage mit der Außenseite 20 der Motorwicklung 11.

Die Wicklungsdrähte 52a, 52b und 52c werden dann mit den entsprechenden Anschlusskontakten 49, 51 und 26 verbunden. Wenn die Anschlusskontakte 49, 51, 26 Schneidklemmen sind, werden die nicht abisolierten Enden der Wicklungsdrähte 52a, 52b und 52c in die entsprechenden Schlitze der Anschlusskontakte 49, 51 bzw. 26 eingeschoben, so dass sie dort automatisch kontaktiert werden.

Der Elektromotor ist jetzt fertig zur Kontaktierung mit den Anschlussleitungen 18a, 18b und 18c, die auf gleiche Weise mit den Anschlusskontakten 49, 51 und 25 verbunden werden.

Sofern die Anschlusskontakte 47, 48 und 25, 26 Aufsteckkontakte sind, müssen die Wicklungsdrähte 52 und die Anschlussleitungen 18 zuvor noch mit Kabelschuhen oder Steckern verbunden werden, was durch Crimpen oder Aufpressen erfolgt.

Für die Verschaltung der Anschlussleitungen 18 mit den Wicklungsdrähten 52 sowie dem temperaturabhängigen Schalter 19 sind also lediglich die beiden Anschlusskontakte 25 und 26, die unmittelbar an dem temperaturabhängigen Schalter 19 ausgebildet sind, sowie eine Doppelkontakt 49 oder beide Doppelkontakte 49 und 51 erforderlich.

Auf der Oberseite 39 der Schaltscheibe 37 sind also lediglich diese Anschlusskontakte 49, 51, 25, 26 sowie die zusätzliche Durchgangsöffnung 41 für die Wicklungsdrähte 52 erforderlich. Aus diesem Grund sind die Querabmaße sowie die Längsabmaße der Schaltkappe 14 verglichen mit dem Stand der Technik sehr gering, ermöglichen aber dennoch eine schnelle und vollautomatische Verschaltung der Wicklungsdrähte 52 mit den Anschlussleitungen 18 und dem temperaturabhängigen Schalter 19.

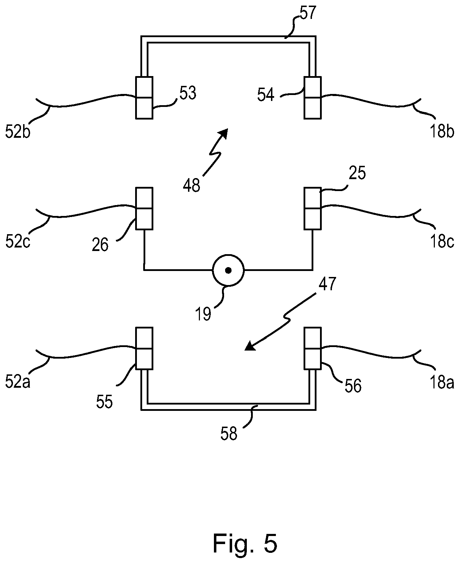

Während bei dem Ausführungsbeispiel der Fig. 4 die weiteren Anschlusskontakte 47 und 48 als Doppelkontakte 49 und 51 ausgebildet sind, ist in Fig. 5 ein Schaltbild gezeigt, bei dem die Anschlusskontakte 47 und 48 nicht als Doppelkontakte sondern wie die Anschlusskontakte 25, 26 des temperaturabhängigen Schalters 19 als Einfachkontakte 53, 54, 55 und 56 ausgebildet sind.

Die Einfachkontakte 53 und 54 werden dann durch eine Brücke 57 und die Einfachkontakte 55 und 56 durch eine Brücke 58 miteinander verbunden.

Wie bei der Verdrahtung gemäß dem Ausführungsbeispiel der Fig. 4 sind auch gemäß dem Ausführungsbeispiel der Fig. 5 lediglich die Wicklungsdrähte 52 und die Anschlussleitungen 18 mit den entsprechenden Einfachkontakten 53, 54, 55, 56 sowie 25 und 26 zu verbinden. Auch dies erfolgt entweder über Schneidklemmtechnik oder über Kabelschuhe bzw. Stecker.

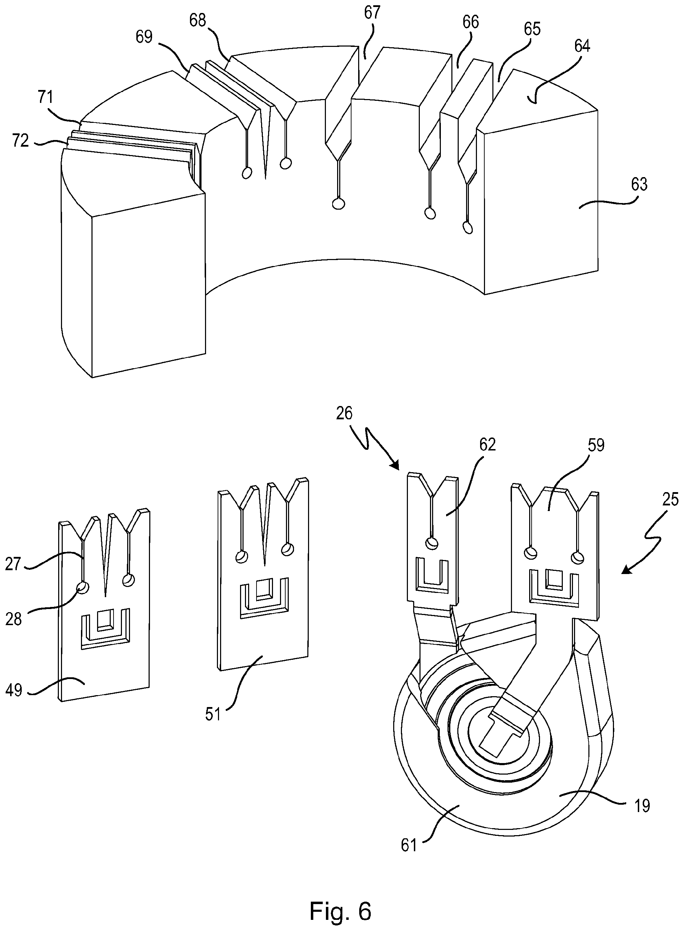

Für den Fall, dass der Elektromotor 10 als Asynchron-Wechselstrommotor mit Kurzschlussläufer ausgebildet ist, ist ein weiterer Wicklungsdraht vorhanden, der ebenfalls mit dem Anschlusskontakt 26 des temperaturabhängigen Schalters 19 verbunden werden muss. Dazu wird der Anschlusskontakt 25 als Doppelkontakt 59 ausgebildet, wie dies in Fig. 6 zu erkennen ist.

Der in Fig. 6 gezeigte temperaturabhängige Schalter 19 weist einen Aufbau auf, wie er in der DE 10 2009 030 353 beschrieben ist, ist also mit einem Umgehäuse 61 versehen, das dem Schutz des Schalters 19 dient.

In Fig. 6 sind die beiden Doppelkontakte 49 und 51 sowie der Doppelkontakt 61 als Schneidklemmen ausgebildet gezeigt; der Anschlusskontakt 26 ist ein Einfachkontakt 62.

Oberhalb der Doppelkontakte 49, 51 und des temperaturabhängigen Schalters 19 ist eine aus Isoliermaterial gefertigte Aufnahme 63 gezeigt, in die die Doppelkontakte 49, 51 und der temperaturabhängige Schalter 19 mit seinem Doppelkontakt 59 und seinem Einfachkontakt 62 von unten eingesteckt werden, so dass sie in der Aufnahme 63 gehalten sind.

Diese Aufnahme 63 wird dann von oben auf die Oberseite 39 der Schaltscheibe 37 aufgesetzt und dort geeignet befestigt, beispielsweise aufgerastet, verklemmt oder verklebt. Die Aufnahme 63 wird dabei so positioniert, dass der temperaturabhängige Schalter 19 so durch die Durchgangsöffnung 42 in das Unterteil 34 hineinragt, wie dies in Fig. 4 zu erkennen ist. Die Stege 46 an der Innenfläche 35 werden dann nicht benötigt, weil der Schalter 19 über seine Anschlusskontakte 25, 26 in der Aufnahme 63 gehalten wird.

Die Aufnahme 63 weist an ihrer Oberseite 64 Querschlitze 65, 66, 67, 68, 69, 71, 72 auf, die den Schlitzen 27 in dem Doppelkontakt 59, dem Einfachkontakt 62, dem Doppelkontakt 51 bzw. dem Doppelkontakt 49 zugeordnet sind.

In diese Querschlitze 65, 66, 67, 68, 69, 71, 72 werden bei der zuvor bereits beschriebenen Verschaltung die Wicklungsdrähte 52 und die Anschlussleitungen 18 eingelegt und dann nach unten gedrückt. Durch die Querschlitze 65, 66, 67, 68, 69, 71, 72 werden die Wicklungsdrähte 52 und die Anschlussleitungen 18 dabei so positioniert, dass sie beim Herunterdrücken sicher geführt werden.

Die Aufnahme 63, die in dem gezeigten Beispiel halbmondförmig ausgebildet ist, so dass sie sich innen in dem Verdrahtungsraum 43 an die Form der Umfangswand 33 anpasst, erleichtert damit sowohl die Montage des Schalters 19 und der Doppelkontakte 49, 51 an der neuen Schaltkappe 14 als auch die spätere Verschaltung der Wicklungsdrähte 52 und Anschlussleitungen 18.

Die Aufnahme 63 kann auch bereits vor der Anbringung des Schalters 19 und der Doppelkontakte 49, 51 an der Oberseite 39 der Schaltscheibe 37 montiert werden oder einstückig mit ihr ausgebildet sein. Der Schalter wird dann bei der Montage der Schaltkappe 14 von dem Unterteil 34 her durch die Durchgangsöffnung 42 in die Aufnahme 63 eingesteckt und dort sicher gehalten.

Die Doppelkontakte 49, 51 werden auf die gleiche Weise durch eine oder zwei weitere Durchgangslöcher in der Schaltscheibe 37 montiert.

Die Aufnahme 63 kann in entsprechender Weise auch dazu ausgelegt sein, die Einfachkontakte 53, 54, 55, 56 zu halten.

## Patentansprüche

1. Schaltkappe für einen Elektromotor (10) mit zumindest einer Motorwicklung (11) und zumindest zwei Anschlussleitungen (18), wobei die Schaltkappe (14) ein zylindrisches Unterteil (34), das mit einer Einstecköffnung (36) zur Aufnahme eines stirnseitigen Abschnittes (12) der Motorwicklung (11) versehen ist, einem integrierten temperaturabhängigen Schalter (19), der derart angeordnet ist, dass er in Anlage mit einer in dem Unterteil (34) aufgenommenen Motorwicklung (11) gelangt, und eine das Unterteil (34) abschließende Schaltscheibe (37) aufweist, die auf ihrer von dem Unterteil (34) abgewandten Oberseite (39) zum elektrischen Verschalten der Anschlussleitungen (18) mit dem temperaturabhängigen Schalter (19) und mit Wicklungsdrähten (52) der Motorwicklung (11) ausgebildet ist,
wobei der temperaturabhängige Schalter (19) mit Anschlusskontakten (25, 26) für eine lötfreie elektrische Verbindung versehen ist, die von der Oberseite (39) der Schaltscheibe (34) her zugänglich sind, **dadurch gekennzeichnet, dass** der temperaturabhängige Schalter (19) durch eine Durchgangsöffnung (42) in der Schaltscheibe (37) derart in das Unterteil (34) hineinragt, dass sich sein Boden (29) quer zu der Schaltscheibe (37) erstreckt.

2. Schaltkappe nach Anspruch 1, **dadurch gekennzeichnet, dass** die Schaltscheibe (37) auf ihrer Oberseite (39) weitere Anschlusskontakte (47, 48, 53, 54, 55, 56) aufweist.

3. Schaltkappe nach Anspruch 2, **dadurch gekennzeichnet, dass** zumindest ein Anschlusskontakt (25, 26, 47, 48) als Doppelkontakt (59, 49, 51) ausgebildet ist.

4. Schaltkappe nach Anspruch 2 oder 3, **dadurch gekennzeichnet, dass** der temperaturabhängige Schalter (19) mit zwei Einfachkontakten ausgestattet ist, und dass auf der Oberseite (39) der Schaltscheibe (37) ein Doppelkontakt (49) angeordnet ist.

5. Schaltkappe nach Anspruch 4, **dadurch gekennzeichnet, dass** auf der Oberseite (39) der Schaltscheibe (37) ein zweiter Doppelkontakt (51) angeordnet ist.

6. Schaltkappe nach Anspruch 2 oder 3, **dadurch gekennzeichnet, dass** der temperaturabhängige Schalter mit einem Einfachkontakt (62) und einem Doppelkontakt (59) ausgestattet ist.

7. Schaltkappe nach einem der Ansprüche 1 bis 6, **dadurch gekennzeichnet, dass** die Anschlusskontakte (25, 26, 47, 48) als Schneid-Klemmkontakt (27, 28) ausgebildet sind.

8. Schaltkappe nach einem der Ansprüche 1 bis 7, **dadurch gekennzeichnet, dass** die Anschlusskontakte (25, 26, 47, 48) als Aufsteckkontakte (31) für Stecker oder Kabelschuhe (32) ausgebildet sind.

9. Schaltkappe nach einem der Ansprüche 1 bis 8, **dadurch gekennzeichnet, dass** der temperaturabhängige Schalter (19) mit seinen Anschlusskontakten (25, 26) an der Schaltscheibe (37) gehalten ist.

10. Schaltkappe nach einem der Ansprüche 1 bis 8, **dadurch gekennzeichnet, dass** der temperaturabhängige Schalter an einer Innenfläche (35) einer Umfangswand (33) des Unterteils (34) gehalten ist.

11. Schaltkappe nach einem der Ansprüche 1 bis 10, **dadurch gekennzeichnet, dass** die Schaltscheibe (37) auf ihrer Oberseite (39) mit einem Verdrahtungsraum (43) versehen ist.

12. Schaltkappe nach Anspruch 11, **dadurch gekennzeichnet, dass** Unterteil (34), Schaltscheibe (37) und Verdrahtungsraum (43) einstückig ausgebildet sind.

13. Schaltkappe nach einem der Ansprüche 1 bis 12, **dadurch gekennzeichnet, dass** auf der Oberseite (39) der Schaltscheibe (37) eine Aufnahme (63) angeordnet ist, in der die Anschlusskontakte (25, 26) des temperaturabhängigen Schalters (19) so gehalten sind, dass durch Querschlitze (64, 65, 66) in einer Oberseite (64) der Aufnahme (63) Wicklungsdrähte (52) und Anschlussleitungen (18) in Eingriff mit den Anschlusskontakten (25,26) bringbar sind.

14. Schaltkappe nach einem der Ansprüche 1 bis 13, **dadurch gekennzeichnet, dass** auf der Oberseite (39) der Schaltscheibe (37) eine Aufnahme (63) angeordnet ist, in der die weiteren Anschlusskontakte (47, 48) so gehalten sind, dass durch Querschlitze (68, 69, 71, 72) in einer Oberseite (64) der Aufnahme (63) Wicklungsdrähte (52) und Anschlussleitungen (18) in Eingriff mit den weiteren Anschlusskontakten (47, 48) bringbar sind.

## Claims

1. Switching cap for an electric motor (10) with at least one motor winding (11) and at least two connecting leads (18), whereby the switching cap (14) comprises a cylindrical lower part (34), which lower part is provided with an insertion opening (36) for receiving an end section (12) of the motor winding (11), an integrated temperature-dependent switch (19), which temperature-dependent switch is arranged such that it comes to lie against a motor winding (11) accommodated in the lower part (34), and a switching disk (37) closing the lower part (34), which switching disk is formed on its upper side (39) for electrically interconnecting the connection leads (18) with the temperature-dependent switch (19) and with winding wires (52) of the motor winding (11), said upper side facing away from the lower part (34), whereby the temperature-dependent switch (19) is provided with connection contacts (25, 26) for a solder-free electrical connection, which connection contacts are accessible from the upper side (39) of the switching disc (34),
**characterized in that** the temperature-dependent switch (19) projects through a passage opening (42) in the switching disk (37) into the lower part (34) such that its bottom (29) extends transversely to the switching disc (37).

2. Switching cap according to claim 1, **characterized in that** the switching disc (37) comprises on its upper side (39) further connection contacts (47, 48, 53, 54, 55, 56).

3. Switching cap according to claim 2, **characterized in that** at least one connection contact (25, 26, 47, 48) is formed as a double contact (59, 49, 51).

4. Switching cap according to claim 2 or 3, **characterized in that** the temperature-dependent switch (19) is equipped with two single contacts, and that on the upper side (39) of the switching disc (37) a double contact (49) is arranged.

5. Switching cap according to claim 4, **characterized in that** a second double contact (51) is arranged on the upper side (39) of the switching disk (37).

6. Switching cap according to claim 2 or 3, **characterized in that** the temperature-dependent switch is equipped with a single contact (62) and a double contact (59).

7. Switching cap according to anyone of claims 1 to 6, **characterized in that** the connection contacts (25, 26, 47, 48) are formed as insulation displacement contacts (27, 28).

8. Switching cap according to anyone of claims 1 to 7, **characterized in that** the connection contacts (25, 26, 47, 48) are formed as fit-on contacts (31) for plugs or cable lugs (32).

9. Switching cap according to anyone of claims 1 to 8, **characterized in that** the temperature-dependent switch (19) is held by its connection contacts (25, 26) on the switching disc (37).

10. Switching cap according to anyone of claims 1 to 8, **characterized in that** the temperature-dependent switch is being held on an inner surface (35) of a peripheral wall (33) of the lower part (34).

11. Switching cap according to anyone of claims 1 to 11, **characterized in that** the switching disc (37) is provided on its upper side (39) with a wiring space (43).

12. Switching cap according to claim 11, **characterized in that** the lower part (34), the switching disc (37) and the wiring space (43) are formed as one piece.

13. Switching cap according to anyone of claims 1 to 12, **characterized in that** on the upper side (39) of the switching disc (37) a receptacle (63) is arranged, in which receptacle the connection contacts (25, 26) of the temperature-dependent switch (19) are held such that winding wires (52) and connection leads (18) can be brought into engagement with the connection contacts (25, 26) through transverse slots (64, 65, 66) in an upper side (64) of the receptacle (63).

14. Switching cap according to anyone of claims 1 to 13, **characterized in that** on the upper side (39) of the switching disc (37) a receptacle (63) is arranged, in which receptacle the further connection contacts (47, 48) are held such that winding wires (52) and connecting leads (18) can be brought into engagement with the further connection contacts (47, 48) through transverse slots (68, 69, 71, 72) in an upper side (64) of the receptacle (63).

## Revendications

1. Capuchon de commutation pour un moteur électrique (10) avec au moins un bobinage moteur (11) et au moins deux câbles de raccordement (18), dans lequel le capuchon de commutation (14) présente une partie inférieure cylindrique (34), qui est dotée d'une ouverture d'enfichage (36) pour la réception d'une section côté avant (12) du bobinage moteur (11), un interrupteur thermique intégré (19), qui est agencé de sorte qu'il parvient en appui avec un bobinage moteur (11) reçu dans la partie inférieure (34), et un disque de commutation (37) terminant la partie inférieure (34), qui est réalisé sur sa face supérieure (39) opposée à la partie inférieure (34) pour l'interconnexion électrique des câbles de raccordement (18) avec l'interrupteur thermique (19) et avec des fils de bobinage (52) du bobinage moteur (11),
dans lequel l'interrupteur thermique (19) est doté de contacts de raccordement (25, 26) pour une liaison électrique sans soudure, qui sont accessibles depuis la face supérieure (39) du disque de commutation (34), **caractérisé en ce que** l'interrupteur thermique (19) pénètre par une ouverture de passage (42) dans le disque de commutation (37) dans la partie inférieure (34) de telle sorte que son fond (29) s'étend transversalement au disque de commutation (37).

2. Capuchon de commutation selon la revendication 1, **caractérisé en ce que** le disque de commutation (37) présente sur sa face supérieure (39) d'autres contacts de raccordement (47, 48, 53, 54, 55, 56).

3. Capuchon de commutation selon la revendication 2, **caractérisé en ce qu'**au moins un contact de raccordement (25, 26, 47, 48) est réalisé en tant que double contact (59, 49, 51).

4. Capuchon de commutation selon la revendication 2 ou 3, **caractérisé en ce que** l'interrupteur thermique (19) est équipé de deux contacts simples, et qu'un double contact (49) est agencé sur la face supérieure (39) du disque de commutation (37).

5. Capuchon de commutation selon la revendication 4, **caractérisé en ce qu'**un deuxième double contact (51) est agencé sur la face supérieure (39) du disque de commutation (37).

6. Capuchon de commutation selon la revendication 2 ou 3, **caractérisé en ce que** l'interrupteur thermique est équipé d'un contact simple (62) et d'un double contact (59).

7. Capuchon de commutation selon l'une quelconque des revendications 1 à 6, **caractérisé en ce que** les contacts de raccordement (25, 26, 47, 48) sont réalisés en tant que contact à serrage découpage (27, 28).

8. Capuchon de commutation selon l'une quelconque des revendications 1 à 7, **caractérisé en ce que** les contacts de raccordement (25, 26, 47, 48) sont réalisés en tant que contacts d'enfichage (31) pour fiche et cosse de connexion (32).

9. Capuchon de commutation selon l'une quelconque des revendications 1 à 8, **caractérisé en ce que** l'interrupteur thermique (19) est retenu avec ses contacts de raccordement (25, 26) au niveau du disque de commutation (37).

10. Capuchon de commutation selon l'une quelconque des revendications 1 à 8, **caractérisé en ce que** l'interrupteur thermique est retenu au niveau d'une surface intérieure (35) d'une paroi périphérique (33) de la partie inférieure (34).

11. Capuchon de commutation selon l'une quelconque des revendications 1 à 10, **caractérisé en ce que** le disque de commutation (37) est doté sur sa face supérieure (39) d'un espace de câblage (43).

12. Capuchon de commutation selon la revendication 11, **caractérisé en ce que** la partie inférieure (34), le disque de commutation (37) et l'espace de câblage (43) sont réalisés d'un seul tenant.

13. Capuchon de commutation selon l'une quelconque des revendications 1 à 12, **caractérisé en ce qu'**un logement, dans lequel les contacts de raccordement (25, 26) de l'interrupteur thermique (19) sont retenus de sorte que des fils de bobinage (52) et câbles de raccordement (18) peuvent être amenés en prise avec les contacts de raccordement (25, 26) par des fentes transversales (64, 65, 66) dans une face supérieure (64) du logement (63), est agencé sur la face supérieure (39) du disque de commutation (37).

14. Capuchon de commutation selon l'une quelconque des revendications 1 à 13, **caractérisé en ce qu'**un logement (63), dans lequel les autres contacts de raccordement (47, 48) sont retenus de sorte que des fils de bobinage (52) et câbles de raccordement (18) peuvent être amenés en prise avec les autres contacts de raccordement (47, 48) par des fentes transversales (68, 69, 71, 72) dans une face supérieure (64) du logement (63), est agencé sur la face supérieure (39) du disque de commutation (37).
